# EUROPEAN PATENT APPLICATION

(11) **EP 3 757 922 A1**
(43) Date of publication of application: **30.12.2020**
(21) Application number: 19756736.5
(22) Date of filing: 24.01.2019
(51) Int. Cl.: G06Q 20/40, G06Q 20/38

(54) **ELECTRONIC PAYMENT SYSTEM AND METHOD AND PROGRAM USING BIOMETRIC AUTHENTICATION**

(30) Priority: 22.02.2018 KR 20180021361
(71) Applicant: Oh, Stephen Sang Geun, Seoul (KR); Lee, Jin-Seo, Gangwon-do 24294 (KR); Lee, Ki-Yong, Seoul 01346 (KR)
(72) Inventor: Oh, Stephen Sang Geun, Seoul (KR); Lee, Jin-Seo, Gangwon-do 24294 (KR); Lee, Ki-Yong, Seoul 01346 (KR)
(74) Representative: Viering, Jentschura & Partner mbB Patent- und Rechtsanwälte
(86) International application number: PCT/KR2019/001020
(87) International publication number: WO 2019/164139

(57) **Abstract**

The present invention relates to an electronic approval method using biometric authentication, comprising: a **biometric certificate storage step** in which biometric certificates issued, encrypted and hashed by a biometric authentication server are stored and activated in biometric recognition modules of a manager and approvers; an **approver list registration step** in which the manager logs in to an approval server and then an approver list is registered in the approval server; an **approver's approval step** in which for the approval of each of the approvers to the approval server, biometric information of the approvers is input into the biometric recognition modules, the biometric certificate is transmitted to the biometric authentication server accordingly, the biometric certificate is hashed to be verified whether original or not and is decrypted to be verified by the content, and then a biometric authentication result is transmitted to the approval server; an **approver's approval server log-in step** in which for the log-in of each of the approvers to the approval server, biometric information of the approvers is input into the biometric recognition modules, the biometric certificate is transmitted to the biometric authentication server accordingly, the biometric certificate is hashed to be verified whether original or not and is decrypted to be verified by the content, and then a biometric authentication result is transmitted to the approval server; and an **approval completion step** in which the approval is completed by the approvals of all the approvers in the approver list.

## Description

### [Technical Field]

The present invention relates to an electronic approval system, a method, and a program using biometric authentication, and more particularly, to an electronic approval system, a method, and a program using biometric authentication, which can identify and process an actual approval requester in real time by authenticating biometric information of an approver requesting authentication in a non-transmission state instead of official authentication by an official certificate or private authentication by an ID/password to prevent agency approval or authentication piracy.

### [Background Art]

In general, an electronic approval system using a computer network is known. In such a system, multi-stage approvers such as a drafter who drafts a processing matter and some superiors thereof are subject to perform sequential approvals, and when all approvers complete approvals, the drafted processing matter is performed.

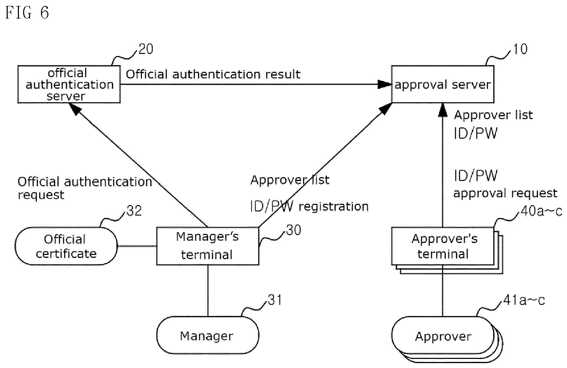

In this case, there may be various schemes in which the approvers electronically perform the approvals and such various schemes may include, for example, an official authentication and ID/password based system illustrated in FIG. 6. In the system, when a manager 31 accesses an approval server 10 through a manager's terminal 30 and requests official authentication by an official certificate 32 for log-in, an official authentication server 20 confirms the official certificate and a password and then transmits an official authentication result to the approval server 10, and as a result, the manager 31 can log in to it in an official authentication state.

Thereafter, the logged-in manager 31 completes preparation by registering an approver list to perform approvals from now on and IDs/passwords to be used by the approvers in the approval server 10.

Then, in an actual approval, when approvers 41a to 41c access the approval server 10 through approver's terminals 40a to 40c and request authentication by the IDs/passwords registered in the approval server 10 for log-in, the approval server 10 confirms the registered approver list and the IDs/passwords of thereof, and as a result, the approvers 41a to 41c may log in to it in a private authentication state.

Thereafter, the approvers 41a to 41c may just click an approval button or input an additional password for approval for separate security enhancement for drafted contents, and as a result, the approval is made. In addition, when all approvers on the list perform the approvals, the approval server 10 processes the drafted contents at last.

Though an example in which the approval is separately performed after log-in is described in the above example, the present invention is not limited thereto, but the same may be applied even in a case where the log-in is omitted and the approval is directly made by ID/password.

Meanwhile, an electronic approval system using biometric information is also disclosed in the related art.

For example, a patent document described below discloses an electronic approval system which authenticates electronic approval using fingerprint recognition of a mobile communication terminal which includes a mobile communication terminal having a fingerprint identification IC card receiving fingerprints of user of the terminal and converting the fingerprints into electrical signals and then storing the electrical signals in a memory built therein, a fingerprint information data server having financial information and fingerprint data of the terminal users written therein, an authentication system determining whether fingerprint information input from the terminal user and the fingerprint data written in the data server coincide with each other, and a wireless transmission/reception network wirelessly processing transmission/reception among the terminal, the fingerprint information data server and the authentication system.

### [Prior Art Document]

### [Patent Document]

(Patent Document 1) Korean Patent Unexamined Publication Gazette No. 10-2004-0087663

### [Disclosure]

### [Technical Problem]

However, in the system of FIG. 6 above, when the manager logs in the approval server 10, the manager is subject to undergo official authentication, but a security system by the official certificate basically verifies only whether there exists an official certificate and does not verify whether the person requesting the authentication is the very person himself/herself, and as a result, there is a fundamental problem. That is, the official certificate may be copied to another device other than the manager's terminal 30 and when the manager intentionally or unintentionally exposes an official authentication password to another person, another person may log in the approval server 10 without permission as if being the manager. Even when a MAC address or the like of the manager's terminal 30 is limitedly managed and additional verification is performed, a problem may similarly occur. That is, a problem such as agency approval or authentication piracy occurs in terms of the manager.

Moreover, since the approvers just log in through private authentication of a private approval server 10 rather than an official authentication, there is an inherent problem that the system cannot but be extremely vulnerable to security.

Furthermore, above authentication schemes of the approvers are done by ID/password and a security system by ID/password basically has a fundamental problem in that the security system verifies whether the ID/password is input rather than verifying whether the person who requests the authentication is the very person himself/herself. That is, when the approvers intentionally or unintentionally expose the ID/password to another person, another person may log in the approval server 10 without permission as if being the approver at last. In this case, even when MAC addresses or the like of the approver's terminals 40a to 40c are limitedly managed and additional verification is performed, a problem may similarly occur. That is, a problem such as agency approval or authentication piracy occurs in terms of the approver.

Moreover, log-in IDs/passwords and/or approval passwords corresponding to the list of all approvers are stored in the approval server 10 in advance and even if the approvers intend to enhance security, a problem of hacking occurs depending on a security level of the approval server.

Meanwhile, in the technology of the patent document, a problem of intentional/unintentional exposure of ID/password does not occur, but financial information and fingerprint data of terminal users are recorded in the fingerprint information data server and the authentication system is configured to determine whether the fingerprint information input from the terminal user and the fingerprint data recorded in the data server coincide with each other. Moreover, the authentication system is constructed separately from the data server.

Accordingly, when a fingerprint of a user is scanned, the biometric information thereof is transmitted to the authentication system and the fingerprint information which is already recorded is also transmitted to the authentication system. That is, the fingerprint information which is personal information floats on a network and there is a problem that the fingerprint information is exposed to a risk of infinite hacking.

Moreover, since the fingerprint information data server is also a place in which the personal information is collected, the problem of hacking occurs depending on the security level.

The present invention is to solve the problems in the related art and has been made in an effort to provide an electronic approval system, a method, and a program using biometric authentication, which identify and process an actual authentication requester in real time by authentication through biometric information of managers or approvers requesting authentication instead of official authentication by an official certificate or private authentication by ID/password to prevent agency approval or authentication piracy.

Further, the present invention has been made in an effort to provide an electronic approval system, a method, and a program using biometric authentication capable of enhancing security when initially transiting an official authentication system to a biometric authentication system by passing through official authentication in an initial step of biometric authentication.

Further, the present invention has been made in an effort to provide an electronic approval system, a method, and a program which fundamentally interrupt a possibility of hacking by authenticating biometric information of managers or approvers requesting authentication in a non-transmission state, i.e., in a state in which distribution on the network is prevented.

### [Technical Solution]

In order to solve the problem, an electronic approval method using biometric authentication according to the present invention comprises: a **biometric certificate storage step** in which biometric certificates issued, encrypted and hashed by a biometric authentication server are stored and activated in biometric recognition modules of a manager and approvers; an **approver list registration step** in which the manager logs in to an approval server and then an approver list is registered in the approval server; an **approver's approval step** in which for the approval of each of the approvers to the approval server, biometric information of the approvers is input into the biometric recognition modules, the biometric certificate is transmitted to the biometric authentication server accordingly, the biometric certificate is hashed to be verified whether original or not and is decrypted to be verified by the content, and then a biometric authentication result is transmitted to the approval server; an **approver's approval server log-in step** in which for the log-in of each of the approvers to the approval server, biometric information of the approvers is input into the biometric recognition modules, the biometric certificate is transmitted to the biometric authentication server accordingly, the biometric certificate is hashed to be verified whether original or not and is decrypted to be verified by the content, and then a biometric authentication result is transmitted to the approval server; and an **approval completion step** in which the approval is completed by the approvals of all the approvers in the approver list.

Here, the biometric information is input into the biometric recognition module and then used only therein to be preferably **processed as to be security-maintained** so as not to be leaked to the outside thereof.

In addition, the electronic approval method using biometric authentication may further include, before any one of the biometric certificate storage step and the approver list registration step, a **manager's official authentication step** in which for the log-in of the manager to the approval server or the biometric authentication server, an official certificate of the manager is transmitted to an official authentication server for the manger to log in to the approval server or the biometric authentication server in an official authentication state.

Meanwhile, in order to solve the problem, an electronic approval system using biometric authentication according to the present invention comprises: an **approval server** which receives a log-in of a manager and receives a registration of an approver list, determines log-ins or electronic approvals of the manager and all approvers on the approver list according to a biometric authentication result from a biometric authentication server, and performs a completion process of the electronic approval by the log-ins or the approvals of all approvers on the approver list; a **biometric recognition module** which receives and stores a biometric certificate issued, encrypted and hashed by the biometric authentication server and, afterwards, receives biometric information of the manager or the approvers to transmit the biometric certificate to the biometric authentication server; and **a biometric authentication server** which issues, encrypts and hashes the biometric certificate to transmit the biometric certificate to the biometric recognition module and, when receiving the biometric certificate from the biometric recognition module afterwards, hashes the biometric certificate to verify whether original or not and decrypts the biometric certificate to verify the content, and then transmits a biometric authentication result to the approval server.

Meanwhile, in order to solve the problem, an electronic approval program using biometric authentication according to the present invention is an electronic approval program using biometric authentication, which is recorded in a recording medium which may be read by an information processing device having a program for executing any one method by the information processing device, which is recorded therein.

### [Advantageous Effects]

According to the present invention, provided are an electronic approval system, a method, and a program using biometric authentication, which identify and process an actual authentication requester in real time by authentication through biometric information of managers or approvers requesting authentication instead of official authentication by an official certificate or private authentication by an ID/password to prevent agency approval or authentication piracy.

Further, provided are an electronic approval system, a method, and a program using biometric authentication capable of enhancing security when initially transiting an official authentication system to a biometric authentication system by passing through official authentication in an initial step of biometric authentication.

Further, provided are an electronic approval system, a method, and a program which fundamentally interrupt a possibility of hacking by authenticating biometric information of managers or approvers requesting authentication in a non-transmission state, i.e., in a state in which distribution on the network is prevented.

### [Description of Drawings]

FIG. 1 is a system block diagram of an electronic approval system, a method, and a program according to an embodiment of the present invention.
FIG. 2 illustrates an example of a flowchart during a registration process of an approver list and an example of an approver list according to an embodiment of the present invention.
FIG. 3 is a flowchart of an approval processing process according to an embodiment of the present invention.

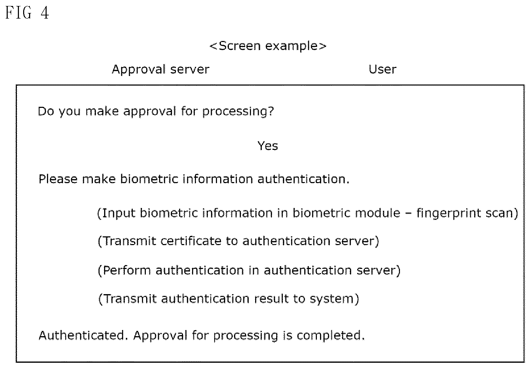

FIG. 4 is an illustrative diagram of an approval screen according to an embodiment of the present invention.

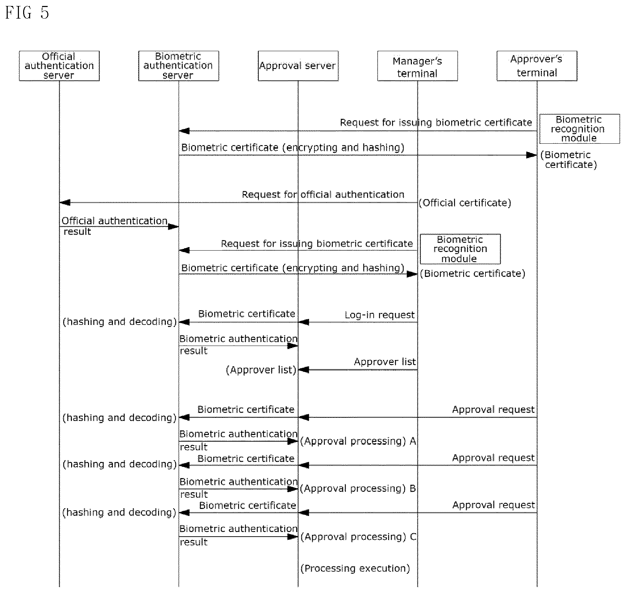

FIG. 5 is a time chart according to an embodiment of the present invention.
FIG. 6 is a block diagram of an electronic approval system of an ID/password scheme in a related art.

### <Explanation of Reference Numerals and Symbols>

- 10:: Approval server
- 20:: Official authentication server
- 30:: Manager's terminal
- 31:: manager
- 32:: official certificate
- 33:: biometric recognition module
- 34:: biometric certificate
- 40a∼40c:: Approver's terminal
- 41a∼41c:: approver
- 43a∼43c:: biometric recognition module
- 44a∼44c:: biometric certificate
- 50:: Biometric authentication server

### [Best Mode]

Hereinafter, the present invention will be described in detail by using a detailed embodiment with reference to accompanying drawings. However, one member or module may be implemented as two or more members or modules by splitting functions thereof, and on the contrary, two or more members or modules may be implemented as one member or module by integrating functions thereof. In addition, connecting any member or module to the back, front, left, right, on or under of another member or module may include a case where another third member or modules is interposed therebetween.

### <System Configuration>

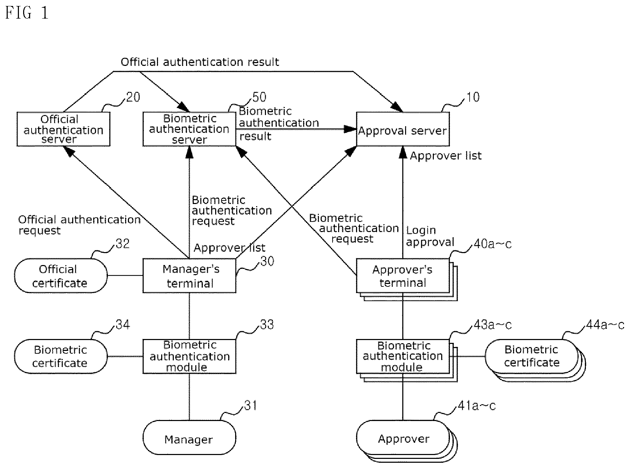

An electronic approval system using biometric authentication according to an embodiment of the present invention in which an electronic approval method using biometric authentication is implemented is configured to include **an approval server 10, biometric recognition modules 33 and 43a to 43c, and a biometric authentication server 50** as illustrated in FIG. 1.

The **approval server 10** is a server that receives a log-in of a manager 31 and receives a registration of an approver list, determines log-ins or electronic approvals of the manager 31 and all approvers 41a to 41c on the approver list according to a biometric authentication result from the biometric authentication server 50, and performs a completion process of the electronic approval by the log-ins or the approvals of all approvers 41a to 41c on the approver list.

The **biometric recognition modules 33 and 43a to 43c** are modules that receive and store biometric certificates 34 and 44a to 44c issued, encrypted and hashed by the biometric authentication server 50 and, afterwards, receives biometric information of the manager 31 or the approvers 41a to 41c to transmit the biometric certificates 34 and 44a to 44c to the biometric authentication server 50. The biometric recognition modules 33 and 43a to 43c may communicate with the biometric authentication server 50 through a network while being provided in a manager's terminal 30 which is a terminal of the manager 31 or approver's terminals 40a to 40c which are terminals of the approvers 41a to 41c. The biometric recognition modules 33 and 43a to 43c may be configured as independent devices apart from the manager's terminal 30 or the approver's terminals 40a to 40c and for example, a USB interface may be used for connection for data communication between the biometric recognition modules 33 and 43a to 43c and the manager's terminal 30 or the approver's terminals 40a to 40c.

The **biometric authentication server 50** is a server that issues, encrypts and hashes the biometric certificates 34 and 44a to 44c to transmit the biometric certificates 34 and 44a to 44c to the biometric recognition modules 33 and 43a to 43c and, when receiving the biometric certificates 34 and 44a to 44c from the biometric recognition modules 34 and 44a to 44c afterwards, hashes the biometric certificates 34 and 44a to 44c to verify whether original or not and decrypts the biometric certificates 34 and 44a to 44c to verify the content, and then transmits a biometric authentication result to the approval server 10.

### <Basic Configuration of Method>

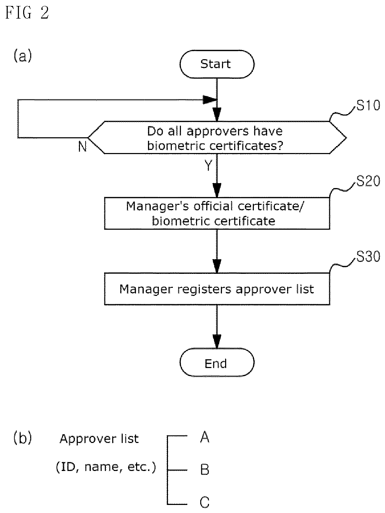

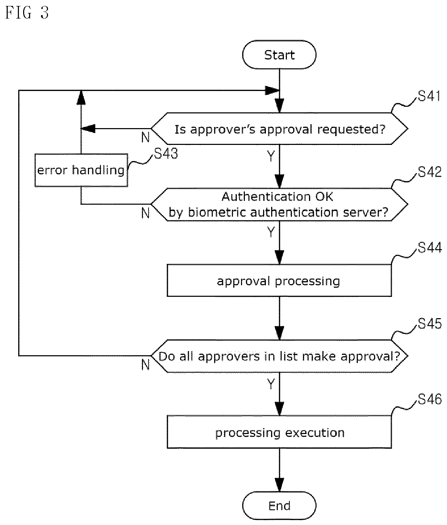

An electronic approval method using biometric authentication according to an embodiment of the present invention is configured to include **a biometric certificate storage step S10 and S20, an approver list registration step S30, an approver log-in step S41 to S44, and an approval completion step S45 and S46** as illustrated in FIGS. 2 and 3.

The **biometric certificate storage step** S10 and S20 is a step in which the biometric certificates 34 and 44a to 44c issued, encrypted and hashed by the biometric authentication server 50 are stored and activated in the biometric recognition modules 33 and 43a to 43c of the manager 31 and the approvers 41a to 41c as illustrated in FIG. 2(a). The manager 31 and the approvers 41a to 41c may be connected to and registered in the biometric authentication server 50 separately from each other. The biometric recognition modules 33 and 43a to 43c may be modules provisionally authenticated from the biometric authentication server 50 in advance and may be configured to be transferred to the manager 31 and the approvers 41a to 41c and then activated through a predetermined procedure such as transmission of a password by a terminal 30 of the manager 31 and terminals 40a to 40c of the approvers 41a to 41c through the network, for example. The biometric recognition modules 33 and 43a to 43c may be independent devices detachably mounted on the manager's terminal 30 or the approver's terminals 40a to 40c and for example, the USB interface may be used for the detachable mounting.

The **approver list registration step** S30 is a step in which the manager 31 logs in to an approval server 10 and then an approver list is registered in the approval server 10 as illustrated in FIG. 2(a).

Various schemes for enabling security processing may be available as a log-in scheme of the manager 31 and for example, a scheme by an official certificate 32 of the manager's terminal 30 for an official authentication server 20 in the related art or a scheme by the biometric certificate 34 of the biometric recognition module 33 for the biometric authentication server 50 according to the present invention may be used. The approver list is a list of approvers requiring log-in and approval as a requirement for operation of the electronic approval and for example, as illustrated in FIG. 2(b), the ID, the password, a name, etc., may be stored as a list in a database of a memory of the approval server 10 in a table format.

The **approver's approval step** S41 to S44 is a step in which as illustrated in FIG. 3, for the approval of each of the approvers 41a to 41c to the approval server 10, biometric information of the approvers 41a to 41c is input into the biometric recognition modules 43a to 43c, the biometric certificate 44a to 44c is transmitted to the biometric authentication server 50 accordingly, the biometric certificate 44a to 44c is hashed to be verified whether original or not and is decrypted to be verified by the content, and then a biometric authentication result is transmitted to the approval server 10.

At the time of approval by each of the approvers 41a to 41c, the biometric information is just input into the biometric recognition modules 43a to 43c and not transmitted through the network. Only the biometric certificates 44a to 44c are transmitted through the network. In addition, transmitting the biometric authentication result from the biometric authentication server 50 to the approval server 10 is not by directly comparing and processing the biometric information but by hashing and decrypting the biometric certificates 44a to 44c which are encrypted and hashed. Accordingly, even when the biometric certificates 44a to 44c are leaked, the biometric certificates 44a to 44c are safe and leakage of the biometric information itself is fundamentally prevented.

The **approval completion step** S45 and S46 is a step in which the approval is completed by the approvals of all the approvers 41a to 41c in the approver list as illustrated in FIG. 3. As a result, drafted contents to be performed through the electronic approval are processed to be executed.

### <Non-transmission biometric information - sealing>

Here, the biometric information is input into the biometric recognition modules 33 and 43a to 43c and then used only therein to be preferably **processed as to be security-maintained** so as not to be leaked to the outside thereof.

That is, the biometric information such as the fingerprint is locally authenticated by using prestored biometric information verification data in the biometric recognition modules 33 and 43a to 43c and after an authentication result is passed, the biometric information is not used any more. The biometric information may be discarded in the biometric recognition modules 33 and 43a to 43c. From the biometric recognition modules 33 and 43a to 43c to the biometric authentication server 50, the biometric information is not transmitted but only the encrypted and hashed biometric certificates 44a to 44c stored in the biometric recognition modules 33 and 43a to 43c are just transmitted.

Accordingly, the risk of hacking of the biometric information is obstructed.

### <Official authentication log-in>

Before any one of the biometric certificate storage step S10 and S20 and the approver list registration step S30, a **manager's official authentication step** may be preferably further provided, in which for the log-in of the manager 31 to the approval server 10 or the biometric authentication server 50, an official certificate 32 of the manager 31 is transmitted to an official authentication server 20 for the manger 31 to log in to the approval server 10 or the biometric authentication server 50 in an official authentication state.

The manager is officially authenticated by an official authentication scheme guaranteed by the related art and storing the biometric certificate or registering the approver list is performed in such a state, and as a result, the security for the manager is thoroughly performed and security is secured for new launching of a biometric authentication scheme based on the performed security.

### <Program>

An electronic approval program using biometric authentication according to the present invention may be configured by an electronic approval program using biometric authentication, which is recorded in a recording medium which may be read by an information processing device having a program for executing the method disclosed in any one mentioned above by the information processing device, which is recorded therein. The recording medium may include a USB memory, CD, DVD, a semiconductor memory, a hard disk, SSD, etc., but is not limited thereto.

Hereinabove, the present invention is described in detail based on a preferred embodiment, but the present invention is not limited thereto and it should be interpreted that modifications and improvements made within the scope disclosed in the appended claims belong to the scope of the present invention.

### [Industrial Applicability]

The present invention may be used for an industry of the electronic approval system, method, and program using biometric authentication.

## Claims

1. An electronic approval method using biometric authentication, comprising:
a **biometric certificate storage step** in which biometric certificates issued, encrypted and hashed by a biometric authentication server are stored and activated in biometric recognition modules of a manager and approvers;
an **approver list registration step** in which the manager logs in to an approval server and then an approver list is registered in the approval server;
an **approver's approval step** in which for the approval of each of the approvers to the approval server, biometric information of the approvers is input into the biometric recognition modules, the biometric certificate is transmitted to the biometric authentication server accordingly, the biometric certificate is hashed to be verified whether original or not and is decrypted to be verified by the content, and then a biometric authentication result is transmitted to the approval server;
an **approver's approval server log-in step** in which for the log-in of each of the approvers to the approval server, biometric information of the approvers is input into the biometric recognition modules, the biometric certificate is transmitted to the biometric authentication server accordingly, the biometric certificate is hashed to be verified whether original or not and is decrypted to be verified by the content, and then a biometric authentication result is transmitted to the approval server; and
an **approval completion step** in which the approval is completed by the approvals of all the approvers in the approver list.

2. The electronic approval method of claim 1, wherein the biometric information is input into the biometric recognition module and then used only therein to be preferably **processed as to be security-maintained** so as not to be leaked to the outside thereof.

3. The electronic approval method of claim 1 or 2, further comprising:
before any one of the biometric certificate storage step and the approver list registration step,
a **manager's official authentication step** in which for the log-in of the manager to the approval server or the biometric authentication server, an official certificate of the manager is transmitted to an official authentication server for the manger to log in to the approval server or the biometric authentication server in an official authentication state.

4. An electronic approval system using biometric authentication, comprising:
an **approval server** which receives a log-in of a manager and receives a registration of an approver list, determines log-ins or electronic approvals of the manager and all approvers on the approver list according to a biometric authentication result from a biometric authentication server, and performs completion process of the electronic approval by the log-ins or the approvals of all approvers on the approver list;
a **biometric recognition module** which receives and stores a biometric certificate issued, encrypted and hashed by the biometric authentication server and, afterwards, receives biometric information of the manager or the approvers to transmit the biometric certificate to the biometric authentication server; and
a **biometric authentication server** which issues, encrypts and hashes the biometric certificate to transmit the biometric certificate to the biometric recognition module and, when receiving the biometric certificate from the biometric recognition module afterwards, hashes the biometric certificate to verify whether original or not and decrypts the biometric certificate to verify the content, and then transmits a biometric authentication result to the approval server.

5. An electronic approval program using biometric authentication, which is recorded in a recording medium which may be read by an information processing device having a program for executing the method disclosed in any one of claims 1 to 3 by the information processing device, which is recorded therein.
